# EUROPEAN PATENT SPECIFICATION

(11) **EP 1 914 614 B1**
(45) Date of publication and mention of the grant of the patent: **15.08.2012**
(21) Application number: 06121464.9
(22) Date of filing: 28.09.2006
(51) Int. Cl.: G05D 16/10, F04B 49/08, F04B 53/10

(54) **Proportional pressure control valve**
Proportional-Druckregelventil
Soupape de régulation de pression proportionnelle

(43) Date of publication of application: 23.04.2008
(73) Proprietor: Inada, Taichi, 11073 Taipei (TW); John-Valve MFG. Factory Co., Ltd., 40347 Taichung (TW)
(72) Inventor: Inada, Taichi, 11073 Taipei (TW)
(74) Representative: Isarpatent

(56) References cited:
- EP-A2- 0 255 681
- GB-A- 865 220
- GB-A- 1 090 591
- JP-A- 11 216 459
- US-A- 4 237 926
- US-B2- 6 758 233

## Description

### Field of the Invention

The present invention relates to a proportional controlling valve for controlling pressure and flow rate, which can control the flowrate of a supplied fluid by using the pressure change of the supplied fluid.

### Prior Art

In a conventional way, when controlling the flowrate of a fluid such as a gas and a liquid, air is generally mixed into a suction side of a pump which is interconnected to the proportional controlling valve for controlling the flow rate, the fluid is mixed by using the rotary impeller of the pump. It is necessary to adopt a complex construction of a pressure sensor, a control circuit and a proportional actuating valve to control the flowrate of the controlled fluid to comply the main fluid pressure, while the equipment cost is very expensive.

Such a conventional system is known from document JP 8-110818.

GB 865 220 A describes a fluid pressure regulator which is used to expand a gas, i.e. carbon dioxide, from a liquid state to a gaseous one. The liquid gas flows from a bottle through a duct and bores to an expansion chamber, from which the expanded gas can be delivered to a gas-utilizing device after a cock has been opened. The chamber is fluidly connected to a control chamber in which the gas exerts a pressure on a diaphragm. The gas pressure acting on the diaphragm will move a needle valve to the left against the pressure of a return spring in the direction of a valve seat. The position of the needle valve is determined by the equilibrium of the pressures to which it is submitted on the one side by the gaseous flow released from the bottle and on the other side by the expanded gas the pressure of which is transmitted to the diaphragm. When the pressure in the expansion chamber exceeds the normal operating pressure the needle valve will be moved due to the deformation of the diaphragm to the valve seat and choke the duct either partially or completely. When the device resumes its normal operating conditions, the diaphragm resumes its initial shape and is retarded by the spring and retracts the needle valve from the valve seat.

GB 1 090 591 A describes a fluid pressure relief valve for relieving and regulating the pressure at the outlet side of a positive-displacement pump or the like. A by-pass passage is connected to a suction pipe of a pump and to a discharge pipe of the pump. The by-pass passage can be closed by a valve body in the form of a differential-area piston seating with its face of smaller area on a seat. The face of the piston is exposed directly to the discharge pressure of the pump. The opposite face of the piston is connected to the discharge pipe by way of a flow restriction, and to the suction side by way of a valve. The valve is open while the pump is idle. On starting the pump the discharge pressure rises but the pressure on the larger piston face is low because it is connected to the suction side of the pump through the valve. The restriction only permits a slow rise of pressure on the larger piston face. The discharge pressure that is acting directly on the smaller piston face lifts the piston and opens the by-pass passage so that the pump starts light. On closure of the valve, fluid flow through the restriction slowly raises the pressure on the larger piston face. When this pressure approaches the discharge pressure, the force on the larger face will exceed that exerted by the discharge pressure on the smaller piston face and the relief valve will close.

US 6 758 233 B2 describes a high volume gas regulator. The gas regulator is provided for regulating the pressure of gas flowing from a source of the gas to a gas-utilizing device. The gas regulator has an operating component controlled by a processor which receives the feedback from a pressure sensor. The gas regulator also includes a pressure reducing valve. The pressure reducing valve is controlled by a pressure responsive member which is displaced by operating feed and bleed valves coupled to a control chamber of the pressure responsive member. The feed and bleed valves are operated by a high speed solenoid actuator.

### Problem to be Solved by this Invention

The problem to be solved by the present invention is to provide a proportional controlling valve for controlling pressure and flow rate which can control the flowrate of a controlled fluid into a specified value according to the pressure change of a main fluid by using a simple mechanism without the conventionally used pressure sensor, controlling circuit and proportion actuating valve.

### Means for Solving the Problem

To solve the above mentioned problem, the inventor had made efforts to study and review, which led to find a solution by means of which it is possible to continuously and smoothly control the specified flowrate by connecting a pipeline of supplied main fluid to a pressure chamber of a proportional controlling valve for controlling pressure and flow rate, actuating and controlling the valve for controlling the flowrate of the fluid should be supplied in compliance with the pressure change of the pressure chamber, meanwhile by means of working the action of valve to counteract that pressure and equilibrium mechanism at the specified flowrate.

Thereby a proportional controlling valve for controlling pressure and flow rate is provided, comprising: a main body, comprising a pressure chamber, a fluid inlet, a fluid outlet, and a valve seat, fluidly connecting the fluid inlet and the fluid outlet, a needle valve, which is provided with a plunger and a valve disk, interacting with the valve seat and being arranged in a clearance inside the main body, a coil spring, which is arranged inside the main body and which is arranged in the longitudinal axis of the needle valve for pressing the needle valve against the valve seat via the valve disk and the plunger, and a valve regulating screw, which is arranged inside the main body and which is arranged in the longitudinal axis of the needle valve for regulating the pressure that the coil spring imposes upon the valve disk of the needle valve, wherein the pressure chamber is fluidly connected to the clearance inside the main body where the needle valve is disposed in, the pressure chamber is fluidly connected to a main fluid pipeline on the discharge side of a pump via a pressure sensing pipeline, the pressure acting in the pressure sensing pipeline acts on the side of the valve disk that is facing the valve seat, the fluid inlet and the fluid outlet are interposed into a controlled fluid supplying pipeline, which is on one end of the portion that is associated with the fluid inlet fluidly connected to a controlled fluid supplying unit, and on one end of the portion that is associated with the fluid outlet fluidly connected to a water suction pipeline, which is provided on the charge side of the pump, the pressure in the main fluid pipeline and the pressure sensing pipeline is determined by a pressure valve.

Further a proportional controlling valve for controlling pressure and flow rate is provided, comprising: a main body, comprising a pressure chamber, a fluid inlet, a fluid outlet, and a valve seat, fluidly connecting the fluid inlet and the fluid outlet, a needle valve, which is provided with a plunger and a valve disk, interacting with the valve seat and being arranged in a clearance inside the main body, a coil spring, which is arranged inside the main body and which is arranged in the longitudinal axis of the needle valve for pressing the needle valve against the valve seat via the valve disk and the plunger, and a valve regulating screw, which is arranged inside the main body and which is arranged in the longitudinal axis of the needle valve for regulating the pressure that the coil spring imposes upon the valve disk of the needle valve, wherein the pressure chamber is fluidly connected to the clearance inside the main body where the needle valve is disposed in, the pressure acting in a pressure sensing pipeline acts on the side of the valve disk that is not facing the valve seat, the fluid inlet and the fluid outlet are interposed into a controlled fluid supplying pipeline, which is on one end of the portion that is associated with the fluid outlet fluidly connected to spray nozzle, which is provided inside a vacuum evaporator, the vacuum evaporator is fluidly connected to the suction side of a vacuum pump via a main fluid pipeline, the pressure chamber is fluidly connected to the portion of the main fluid pipeline that connects the vacuum evaporator to the charge side of the vacuum pump, the pressure of the main fluid pipeline on the charge side of the vacuum pump is measured by a vacuometer.

That is to say, in the relation between the controlled fluid and the main fluid caused by the pressure change due to the flow-in of the controlled fluid, this invention is constructed to form an actuating mechanism in equilibrium relation by using the counter equilibrium pressure to the pressure difference or negative pressure between the controlled fluid and the main fluid, which can be controlled by corresponding to the pressure at the equilibrium place to be set to said actuating mechanism, thus the proportional controlling valve for controlling pressure and flowrate can be made to control the flowrate of the controlled fluid to comply with the flowrate of the pressure set by the pressure change of the main fluid. To put it concretely, proportional controlling valve for pressure and flow rate of this invention uses the action of the plunger to adjust the opening of above mentioned controlling valve, said plunger forms said equilibrium relation by using the pushing pressure of the coil spring caused by counteracting to the negative pressure or pressure of the above mentioned main fluid to construct said actuating mechanism, to adjust to the equilibrium place that should to be set of said actuating mechanism.

The proportional controlling valve for controlling pressure and flowrate of this invention is to leave the mechanical action corresponding to the pressure of the main fluid alone to the controlling valve of the controlled fluid and to control the flowrate of the controlled fluid. The pressure that is transferred to the pressure chamber 2 of said proportional controlling valve for controlling pressure and flow rate is allowed the pointed end shape valve seat 6 integrated with the plunger 5 to leave from the valve seat 7 of said controlling valve by pushing back the plunger 5 of the operating valve disk 6 to allow the controlled fluid to flow. It can be accurately and easily controlled when using a proportional controlling valve for controlling pressure and flowrate of this invention.

Moreover, pressure setting can be done in the direction of opening or closing said controlling valve by adjusting the pressure regulating screw 9 assembled under said controlling valve disk 6. Furthermore, when the pressure is negative (vacuum pressure), flowrate can be controlled by using the construction having a direction being opposite to the direction in which the coil spring 8 acts against said valve disk 6 acts. Moreover, as to this pressure adjustment means to substitute the above mentioned valve construction, a cock can be used to do the same action, there is no limitation for such so-called valve construction.

To comply with the pressure of the main fluid, in controlling the flowrate of the controlled fluid, the bifurcated pipeline derived from the main fluid pipeline 11 is connected to the pressure chamber 2 of said controlling valve, intakes the controlled fluid from the fluid inlet 3 the via valve seat 7, valve disk 6 to supply to the necessary place from fluid outlet 4.

For example, when the pressure chamber 2 is subjected to 3 kgf/cm² (about 300kPa), the pressure regulating screw 9 is adjusted and set to supply the controlled fluid and to allow the valve disk 6 to leave from the valve seat 7. Moreover at a pressure over 3 kgf/cm² (about 300kPa), the gap between the valve disk 6 and the valve seat 7 becomes larger and the flowrate also increases. For obtaining the accuracy of the flowrate, it is suitable to adjust the intake pressure of the controlled fluid that is flowing into the fluid inlet 3 separately.

Furthermore, for obtaining the adjustment of the flowrate, when the intake pressure of the controlled fluid that is flowing into the fluid inlet 3 can be adjusted to act as its means, this means can be used to make the most of the difference of the gap between the controlled fluid supplying unit 12 and the fluid inlet 3, or this means can be used to allow the controlled fluid into pressurized state and install a reduction valve in front of the fluid inlet 3 and obtain the needed flow rate.

By use of the plunger 5 which is located at the pressure chamber 2 being connected to the pipeline of the pressurized fluid to act as piston by the fluid pressure, to allow the valve disk 6 of the needle valve act by using the plunger. The plunger is set at the equilibrium relation of the push and press pressure of the coil spring 8 which is pre-stored as the pressure or negative pressure of the pressure chamber, the valve travel of the valve can be adjusted by the pressure regulating screw 9.

The valve travel is pre-confirmed by the pressure regulating screw and the equilibrium relation with the valve travel, connect the fluid supplying source which should admit into fluid inlet 3, outlet 4 to the pipeline of the pressurized fluid, the adjustment of the valve travel by the pressure regulating screw. The valve travel of the valve which is opened by using the pressure of the pipeline and the push and press pressure of the coil spring in case of supplying the fluid, can be counterbalanced to cope with the push and press pressure of the coil spring in proportion to the pressure change of elevation or reduction in pressure of the pipeline in the way of continuous adjustment till reaching the equilibrium state, and the valve travel of valve can be controlled.

### Advantageous Effect of this Invention

According to this invention, it is not necessary to adopt complex mechanism having a conventional feedback loop, it is possible to continuously and smoothly control the specified flowrate to the needed flowrate by using a simple mechanism.

### Brief Description of Drawings

Figures 1 is a longitudinal sectional view of a proportional controlling valve for controlling pressure and flow rate of this invention which is used in a micro bubble generating device.
Figures 2 is a longitudinal sectional view of a proportional controlling valve for controlling pressure and flow rate of this invention which is used in a vacuum evaporation device for seawater desalinization.
Figures 3 diagrammatically illustrates an embodiment of a proportional controlling valve for controlling pressure and flow rate of this invention which is used in a micro bubble generating device disclosed in Japan Patent Application No. 2005-295417.
Figure 4 diagrammatically illustrates an embodiment of a proportional controlling valve for pressure and flow rate of this invention which is used in a vacuum evaporation device for seawater desalinization.

### Description of Notations

1-main body; 2-pressure chamber; 3-fluid inlet; 4-fluid outlet;
5-plunger; 6-valve disk; 7-valve seat; 8-coil spring; 9-valve regulating screw; 10-proportional controlling valve for controlling pressure and flow rate; 11-main fluid pipeline; 12-the controlled fluid supplying unit; 13-pressure sensing pipeline; 14-the controlled fluid supplying pipeline; 15-pressure valve; 16-pump; 17-pressure gauge; 18-water suction pipeline; 20-proportional controlling valve for controlling pressure and flow rate; 21-main fluid pipeline; 22-vacuum pump; 23-pressure sensing pipeline; 24--the controlled fluid supplying pipeline; 25-spray nozzle; 26-vacuum evaporator; 27-vacuometer; 28-condensing tower.

### Embodiment examples

Other objects and aspects of this invention will become apparent from the following description of embodiments with reference to the accompanying drawings.

### Example 1

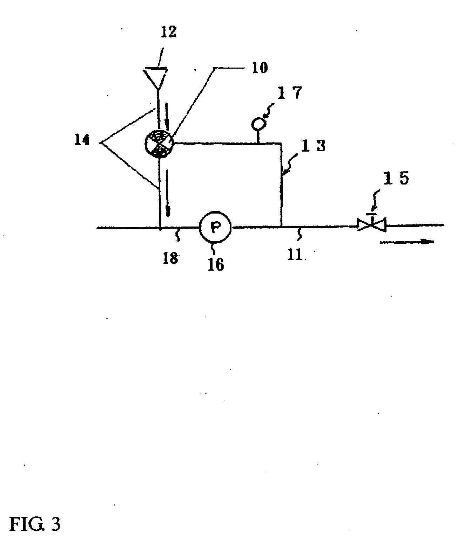

Figure 3 diagrammatically illustrates an embodiment of a proportional controlling valve for controlling pressure and flow rate of this invention which is used in a micro bubble generating device disclosed in Japan Patent Application No. 2005-295417.

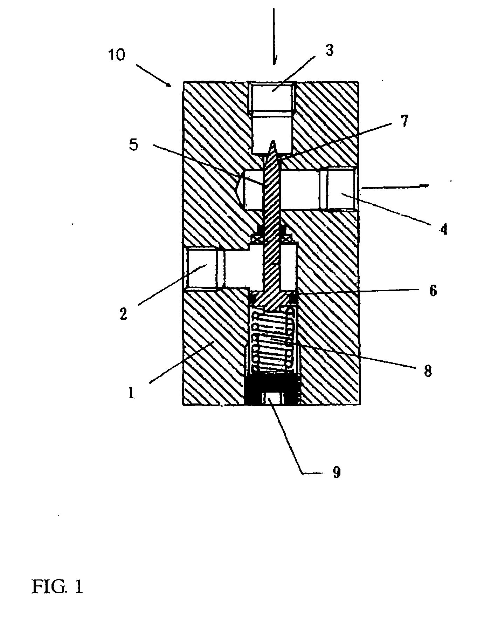

The discharge pressure of the pump 16 that pressurizes the air liquid mixed fluid is set at 6 kgf/cm² (gauge pressure about 600kPa), and the passing pressure of the pressure valve 15 is set at 4 kgf/cm² (gauge pressure about 400kPa), i.e. the pressure is always kept at 4 kgf/cm² all the way through the main fluid pipeline 11 and the pressure sensing pipeline 13 which is interconnected to the main fluid pipeline 11 and to the pressure chamber 2 (refer to Fig. 1) when the pump 16 is operating (confirmed by pressure gauge 17). Therefore, the pressure regulating screw 9 of the proportional controlling valve 10 for controlling pressure and flowrate of this invention is adjusted and the pressure of pressure gauge 17 is set to 3.5 kgf/cm² (gauge pressure about 350kPa).

The construction of the proportional controlling valve 10 for controlling pressure and flow rate of this invention, as shown in Fig. 1, is provided with a needle valve disk 6 and a valve seat 7 which is arranged between an air fluid inlet 3 for admitting the secondary controlled fluid (air supplied by the controlled fluid supplying unit 12 via the controlled fluid supplying pipeline 14) and a fluid outlet 4 for delivering water of the first main fluid (water) to the pump 16 via the main fluid (water) pipeline and the pressure sensing pipeline 13. The flowrate of the secondary fluid is controlled by this valve.

The valve disk 6 is connected to a plunger 5 that acts as a piston. The pressure chamber 2 is interconnected to the main fluid pipeline 11 via the pressure sensing pipeline 13. If the pressure becomes higher, the plunger 5 will counter balance the pushing pressure of a spring coil 8 which is provided at the bottom of said plunger 5, and will be pushed down to increase the admitting flowrate of the controlled fluid. Inversely, if the pressure becomes smaller, the plunger 5 will be operated to close the valve disk 6 by the pushing pressure of the spring coil 8 which is provided at the bottom of said plunger 5.

The opening degree of the valve disk 6 that is operated by the plunger 5 under the pressure of the pressure chamber 2 can be varied to be adjusted to the pressing pressure acting on the plunger 5 of the coil spring 8 by a pressure regulating screw 9. There is an equilibrium relation between the pressure of the pressure chamber 2 and the pressing pressure caused by the adjusted coil spring 8. Therefore, to increase the flowrate of the controlled fluid, if the coil spring 8 is allowed to retreat to decrease the pressing pressure of the pressure regulating screw 9, the plunger 5 will retreat and operate the valve disk 6 in the opening direction and then a large amount of air can be admitted towards the main fluid pipeline 11.

As a result, the pressure of the main fluid pipeline 11 will decrease due to the air admitted into the main fluid pipeline 11. Furthermore, the pressure of the pressure chamber 2 that is interconnected to the main fluid pipeline 11 will decrease and then the plunger 5 will operate the valve disk 6 in the closing direction.

As aforesaid, there is a equilibrium relation between the pressure of the pressure chamber 2 and the pressing pressure caused by the adjusted coil spring 8. The actuation will work convergently toward to this equilibrium state, i.e. the operation direction will be reversed alternatively in the way of operation caused by a feedback loop without intermittent operation to converge toward the specified condition and can smoothly reach the equilibrium state and continuously maintain this state.

In this invention, though it should be set to this equilibrium state at the specified pressure by the pressure regulating screw 9, but it is preferable to confirm the relation between the operation degree of the adjusting screw 9 and the pressure in advance by the pressure gauge 17.

That is to say, the valve disk 6 of the proportional controlling valve 10 for controlling pressure and flow rate of this invention is open under the pressure 4 kgf/cm² (gauge pressure about 400kPa) of the main fluid pipeline 11 at the above mentioned setting condition, or air is sucked into the pump 16 from the controlled fluid supplying pipeline 14 via the suction pipeline 18 if the valve travel is increased. If air flows into the pump 16, air will be compressed to decrease the pressure of the discharge side of the main fluid pipeline 11 and the valve travel will become smaller with this decrease, but even if the pressure reaches 3.5 kgf/cm² (gauge pressure about 350kPa), the pressure of the main fluid pipeline 11 and the pressing pressure caused by the coil spring 8 will be balanced to stop the valve disk 6 when it maintains the valve travel of keeping this pressure.

The valve disk 6 will vary the admitting air flowrate till 3.5 kgf/cm² continuously and smoothly to suck the air in a stable state without repeating the operation of opening at pressure over 3.5 kgf/cm² and closing at pressure under 3.5 kgf/cm². The actuation of the plunger 5 acts smoothly towards the equilibrium state to comply with the pressure of the main fluid pipeline 11 due to the above mentioned theory. Moreover, a needle valve construction can be used as valve disk 6 in the above mentioned embodiment example, but it would do better to use valve having so-called cock construction.

Fluid mixture of air and water of specified ratio can pass through the pressure valve 15 to reduce pressure and form micro bubbles.

### Example 2

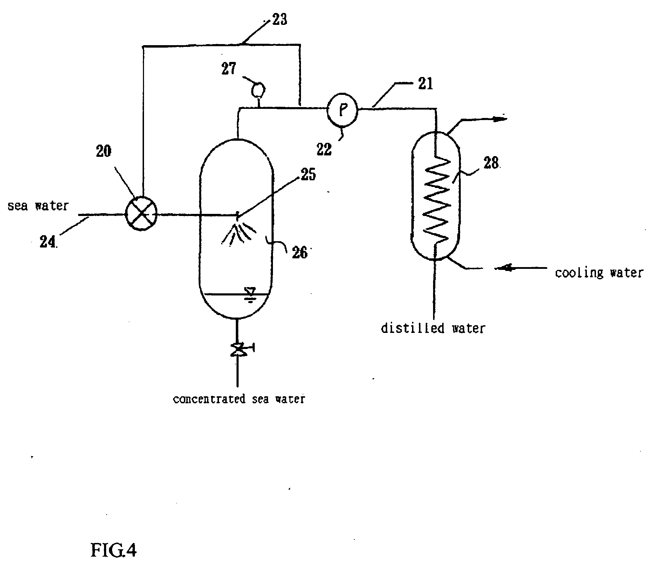

Figure 4 diagrammatically illustrates an embodiment of proportional controlling valve for pressure and flow rate of this invention which is used in vacuum evaporation device for seawater desalinization.

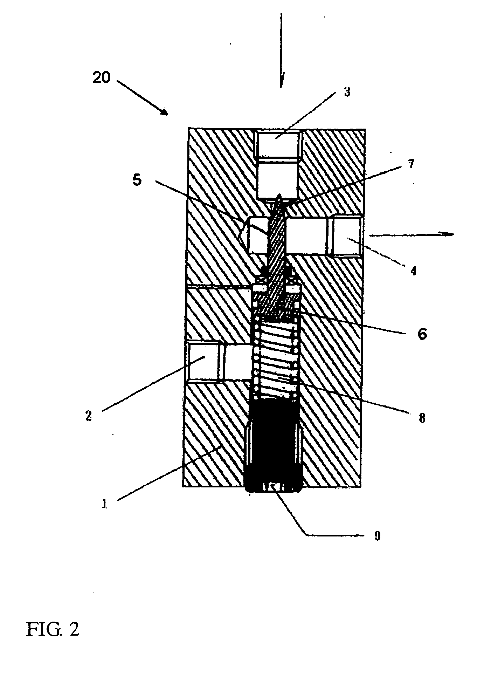

Firstly, the vacuum suction strength of a vacuum pump 22 is set in low vacuum as 10 Torr (about 1.3kPa). Therefore, a main fluid pipeline 21, a pressure sensing pipeline 23 and the pressure chamber 2 of the proportional controlling valve 20 for controlling pressure and flow rate of this invention (refer to Fig. 2) are all of same pressure at 10 Torr. Hence, when adjusting the pressure regulating screw 9 of the proportional controlling valve 20 for controlling pressure and flow rate of this invention, the vacuum of a vacuometer 27 can be adjusted to 15 Torr (about 2kPa) by the confirmed operation in advance.

The construction of the proportional controlling valve 20 for controlling pressure and flow rate is on the ground of acting as negative pressure for working to the pressure chamber, there is no theoretic difference at all but the action direction of the pressure acting against the plunger 5 is opposite to that of Fig. 1.

The proportional controlling valve 20 for controlling pressure and flow rate of this invention can be opened below 15 Torr, acting to the closing direction over 15 Torr by the above mentioned adjustment.

Seawater can be sucked into a vacuum evaporator 26 under the reduced pressure below 15 Torr, evaporated to gasify in a spraying state as sprayed out from a spray nozzle 25. The larger the specific area of foggy liquid and air, the faster the evaporation rate will be in proportion to the specific area.

Steam will be delivered into a condensing tower 28 by the vacuum pump 22. The steam will be cooled to condense into distilled water by cooling water and will flow out from the condensing tower.

Seawater that is not completely evaporated in the vacuum evaporator 26 will be concentrated and discharged from the bottom of the vacuum evaporator 26.

Due to the evaporation temperature of water at 15 Torr is about 17.5°C, seawater should be heated to over 17.5°C in the winter before evaporation, but it is just low enough to be heated by a low cost solar energy device.

As shown in example 1 and example 2, the fluid that is suitable to use in the proportional controlling valve for controlling pressure and flow rate of this invention, no matter how different the phase of gas or liquid is, it is better to use as main fluid or as the controlled fluid. Furthermore, though there is a varied relation between different phases of the same fluid, if the relevant relation between flowrate and pressure of the main fluid and the controlled fluid stands, the theory of this invention is also be adequate for any fluids.

## Claims

1. A proportional controlling valve (10) for controlling pressure and flow rate, provided with:
a main body (1), comprising
a pressure chamber (2),
a fluid inlet (3),
a fluid outlet (4), and
a valve seat (7), fluidly connecting the fluid inlet (3) and
the fluid outlet (4),
a needle valve, which is provided with a plunger (5) and a valve disk (6), interacting with the valve seat (7) and being arranged in a clearance inside the main body (1),
a coil spring (8), which is arranged inside the main body (1) and which is arranged in the longitudinal axis of the needle valve for pressing the needle valve against the valve seat (7) via the valve disk (6) and the plunger (5),
and a valve regulating screw (9), which is arranged inside the main body (1) and which is arranged in the longitudinal axis of the needle valve for regulating the pressure that the coil spring (8) imposes upon the valve disk (6) of the needle valve,
wherein
the pressure chamber (2) is fluidly connected to the clearance inside the main body (1) where the needle valve is disposed in, **characterized in that** the pressure chamber (2) is fluidly connected to a main fluid pipeline (11) on the discharge side of a pump (16) via a pressure sensing pipeline (13),
the pressure acting in the pressure sensing pipeline (13) acts on the side of the valve disk (6) that is facing the valve seat (7),
the fluid inlet (3) and the fluid outlet (4) are interposed into a controlled fluid supplying pipeline (14), which is on one end of the portion that is associated with the fluid inlet (3) fluidly connected to a controlled fluid supplying unit (12),
and on one end of the portion that is associated with the fluid outlet (4) fluidly connected to a water suction pipeline (18),
which is provided on the charge side of the pump (16), and
the pressure in the main fluid pipeline (11) and the pressure sensing pipeline (13) is determined by a pressure valve (15).

## Patentansprüche

1. Proportional-Regelventil (10) zum Regeln des Drucks und der Strömungsrate, das mit Folgendem versehen ist:
- einem Hauptkorpus (1), der Folgendes umfasst:
• eine Druckkammer (2),
• einen Fluideinlass (3),
• einen Fluidauslass (4), und
• einen Ventilsitz (7), der den Fluideinlass (3) und den Fluidauslass (4) in Strömungsverbindung setzt,
- einem Nadelventil, das mit einem Kolben (5) und einer Ventilscheibe (6) versehen ist und mit dem Ventilsitz (7) interagiert und in einem Freiraum im Inneren des Hauptkorpus (1) angeordnet ist,
- einer Schraubenfeder (8), die im Inneren des Hauptkorpus (1) angeordnet ist und die in der Längsachse des Nadelventils angeordnet ist, um das Nadelventil über die Ventilscheibe (6) und den Kolben (5) gegen den Ventilsitz (7) zu drücken,
- und einer Ventilregelschraube (9), die im Inneren des Hauptkorpus (1) angeordnet ist und die in der Längsachse des Nadelventils angeordnet ist, um den Druck zu regeln, den die Schraubenfeder (8) auf die Ventilscheibe (6) des Nadelventils ausübt,
wobei
die Druckkammer (2) mit dem Freiraum im Inneren des Hauptkorpus (1), wo das Nadelventil angeordnet ist, in Strömungsverbindung steht,
**dadurch gekennzeichnet, dass** die Druckkammer (2) mit einer Hauptfluidpipeline (11) auf der Abgabeseite einer Pumpe (16) über eine Druckfühlerleitung (13) in Strömungsverbindung steht,
der Druck, der in der Druckfühlerleitung (13) wirkt, auf der Seite der Ventilscheibe (6) wirkt, die dem Ventilsitz (7) zugewandt ist,
der Fluideinlass (3) und der Fluidauslass (4) in eine geregelte Fluidzuleitung (14) eingesetzt sind, die an einem Ende des Abschnitts, der dem Fluideinlass (3) zugeordnet ist, mit einer geregelten Fluidzufuhreinheit (12) in Strömungsverbindung steht und an einem Ende des Abschnitts, der dem Fluidauslass (4) zugeordnet ist, mit einer Wassersaugleitung (18) in Strömungsverbindung steht, die auf der Beschickungsseite der Pumpe (16) angeordnet ist, und
der Druck in der Hauptfluidpipeline (11) und der Druckfühlerleitung (13) durch ein Druckventil (15) bestimmt wird.

## Revendications

1. Valve de commande proportionnelle (10) pour commander la pression et le débit, prévue de
- un corps principal (1) comprenant :
• une chambre de compression (2),
• une entrée de fluide (3),
• une sortie de fluide (4) et
• un siège de valve (7), qui relie fluidiquement l'entrée de fluide (3) et la sortie de fluide (4),
- un robinet à pointeau comportant un plongeur (5) et un clapet de valve (6) qui interagit avec le siège de valve (7) et se trouve dans un espace libre à l'intérieur du corps principal (1),
- un ressort hélicoïdal (8) qui se trouve à l'intérieur du corps principal (1) et se trouve dans l'axe longitudinal du robinet à pointeau pour presser le robinet à pointeau contre le siège de valve (7) par l'intermédiaire du clapet de valve (6) et du plongeur (5),
- et un écrou régulateur de valve (9) qui se trouve à l'intérieur du corps principal (1) et se trouve dans l'axe longitudinal du robinet à pointeau pour réguler la pression que le ressort hélicoïdal (8) exerce sur le clapet de valve (6) du robinet à pointeau,
la chambre de compression (2) étant reliée, pour ce qui est des fluides, à l'espace libre à l'intérieur du corps principal (1) où se trouve le robinet à pointeau, **caractérisée en ce que**
la chambre de compression (2) est reliée, pour ce qui est des fluides, à une conduite principale de fluide (11) sur le côté décharge d'une pompe (16) par l'intermédiaire d'une conduite détectrice de pression (13),
la pression qui agit dans la conduite détectrice de pression (13) agit sur le côté du clapet de valve (6) qui fait face au siège de valve (7),
l'entrée de fluide (3) et la sortie de fluide (5) sont intercalés dans une conduite fournissant un fluide (14) commandée qui à une extrémité de la partie associée à l'entrée de fluide (3) est reliée, pour ce qui est des fluides, à une unité fournissant un fluide (12) commandée et, à une extrémité de la partie associée à la sortie de fluide (4), est reliée, pour ce qui est des fluides, à une conduite d'aspiration d'eau (18) qui se trouve sur le côté charge de la pompe (16) et
la pression dans la conduite principale de fluide (11) et la conduite détectrice de pression (13) sont déterminées par une valve de compression (15).
